# EUROPÄISCHE PATENTSCHRIFT

(11) **EP 2 334 942 B1**
(45) Veröffentlichungstag und Bekanntmachung des Hinweises auf die Patenterteilung: **07.05.2014**
(21) Anmeldenummer: 09778588.5
(22) Anmeldetag: 17.09.2009
(51) Int. Cl.: F16D 3/64, F16D 3/78, F16D 3/62

(54) **ELASTISCHER GELENKKÖRPER**
ELASTIC JOINT BODY
ARTICULATION ÉLASTIQUE

(30) Priorität: 17.09.2008 DE 102008047596; 05.12.2008 DE 202008016135 U
(43) Veröffentlichungstag der Anmeldung: 22.06.2011
(73) Patentinhaber: Süddeutsche Gelenkscheibenfabrik GmbH & Co. KG, 84479 Waldkraiburg (DE)
(72) Erfinder: WÄHLING, Werner, 84559 Kraiburg am Inn (DE); REIHLE, Joachim, 83530 Schnaitsee (DE); BRANDL, Marc, 84508 Burgkirchen (DE); JÄNDL, Marco, 84524 Neuötting (DE); WAINZ, Tanja, 84574 Taufkirchen (DE); NINDEL, Wolfgang, 84453 Mühldorf (DE); ROTHE, Joachim, 84453 Muehldorf (DE); JERYE, Steffen, 83527 Haag (DE); GRUENWALD, Thomas, 84453 Muehldorf (DE)
(74) Vertreter: Thum, Bernhard
(86) Internationale Anmeldenummer: PCT/EP2009/006733
(87) Internationale Veröffentlichungsnummer: WO 2010/031564

(56) Entgegenhaltungen:
- EP-A- 1 302 686
- EP-A- 1 469 218
- EP-A- 1 818 556
- DE-A1- 3 734 089
- DE-A1-102004 029 989
- GB-A- 339 560

## Beschreibung

Die vorliegende Erfindung betrifft einen elastischen Gelenkkörper für eine Wellenanordnung zum gelenkigen Verbinden zweier Wellenabschnitte nach dem Oberbegriff von Patentanspruch 1.

Derartige Gelenkkörper sind aus dem Stand der Technik bekannt und beispielsweise in folgenden Dokumenten offenbart.

DE 10 2004 029 989 A1 offenbart einen Gelenkkörper mit Buchsen, an deren axialen Enden jeweils Kragenelemente vorgesehen sind.

EP 1 302 686 A beschreibt einen Gelenkkörper mit Buchsen, die über einen Vorsprung mit einer Außenbuchse in Verbindung stehen. Die Außenbuchsen weisen scheibenartige Vorsprünge auf, die integral mit der Außenbuchse ausgebildet sind.

EP 1 469 218 A zeigt einen Gelenkkörper mit Buchsen um die herum eine Außenbuchse angeordnet ist. Die Außenbuchse weist vier scheibenförmige Vorsprünge, die integral mit der Außenbuchse ausgebildet sind.

GB 339 560 A offenbart einen Gelenkkörper mit Buchsen, die an ihren axialen Enden mit Scheiben versehen sind. Die Buchsen weisen zwischen den Schlingenpaketen vom Außenumfang der Buchsen zwei Vorsprünge auf.

Das Dokument DE 37 34 089 A1 beschreibt einen elastischen Gelenkkörper, bei dem jeweils ein auf Zug beanspruchtes Schlingenpaket und zumindest ein auf Schub beanspruchtes Schlingenpaket benachbarte Buchsen umschlingen. Im Umschlingungsbereich der Buchsen werden die Schlingenpakete von spulenartigen, im Querschnitt U-förmigen Kragen geführt bzw. in axialer Richtung abgestützt. Zur Herstellung des elastischen Gelenkkörpers gemäß DE 37 34 089 A1 müssen die Schlingenpakete bzw. Fadenwickel in die U-Form der Kragen gewickelt und anschließend zusammen mit den Kragen auf die Buchsen aufgepresst werden.

In der Beschreibungseinleitung beschreibt Dokument DE 37 34 089 A1 einen elastischen Gelenkkörper, bei dem zur axialen Abstützung der Schlingenpakete in axialer

Richtung Kragen aufgepresst sind. Die Kragen weisen ein L-förmiges Profil auf und werden durch das Aufpressen axial unverschiebbar und drehfest mit der Buchse verbunden. Zwischen den einzelnen Schlingenpaketen, die die Buchsen umschlingen, sind zu deren axialen Führung bzw. Abstützung um die Buchsen herum Stützelemente auf die Buchsen aufgepresst. Ein an der Buchse anliegender Abschnitt der Stützelemente steht in den Bereich der Buchsen vor, auf den die Schlingenpakete zwischen zwei Stützelemente gewickelt werden sollen.

Bei der Herstellung dieses Gelenkkörpers werden zuerst die Kragen bzw. die Stützelemente auf die Buchsen aufpresst und anschließend die Schlingenpakete auf die Buchsen gewickelt. Die Schlingenpakete zwischen den Stützelementen müssen derart gewickelt werden, dass die den an der Buchse anliegenden Abschnitt der Stützelemente umgeben bzw. aufnehmen können.

Der Herstellungsprozess für die beiden voranstehenden aus dem Stand der Technik bekannten Gelenkkörper ist daher relativ aufwendig. Die Schlingenpakete werden entweder direkt auf die spulenartigen Kragen gewickelt und anschließend mit diesen auf die Buchsen aufgepresst oder es müssen zuerst die Stützelemente auf die Buchsen aufgepresst werden, um danach die Schlingenpakete in die Bereiche zwischen zwei Stützelementen einbringen oder wickeln zu können. Die in dem Herstellungsprozess genutzten Wickelmaschinen müssen so ausgelegt werden, dass sie die spulenartigen Kragen oder die Buchsen aufnehmen können, um die Schlingenpakete auf die Buchsen bzw. U-förmigen Kragen wickeln zu können. Außerdem ist die Position der Kragen nicht fest vorgegeben, da es beim Aufpressen toleranzbedingt zu Abweichungen von einer Sollposition kommen kann.

Es ist somit Aufgabe der vorliegenden Erfindung, einen elastischen Gelenkkörper der eingangs bezeichneten Art bereitzustellen, der bei einfachem Aufbau eine Vereinfachung des Herstellungsprozesses ermöglicht.

Diese Aufgabe wird durch einen elastischen Gelenkkörper mit den Merkmalen des Anspruchs 1 gelöst.

Durch die Verwendung einer Stützeinrichtung mit zumindest zwei separat voneinander ausgebildeten auf der Buchse anbringbaren Bundelementen wird es möglich, den Herstellungsprozess des erfindungsgemäßen elastischen Gelenkkörpers deutlich zu vereinfachen und zu beschleunigen, da die Schlingenpakete vor dem Aufbringen auf die Buchse separat, d.h. ohne Kragenelemente, gewickelt werden können und später ein Zusammensetzen des elastischen Gelenkkörpers möglich ist. Zudem werden durch die Stützeinrichtung des erfindungsgemäßen Gelenkkörpers die Schlingenpakete in dem im Betrieb des Gelenkköpers stark belasteten Umfangsbereich der Buchse abgestützt und Reibungswirkungen zwischen den Schlingenpaketen aus gleichen Materialien vermieden.

Durch vorheriges Festlegen und exaktes Einhalten der axialen Position der Bundelemente relativ zu der Buchse nach Maßgabe eines vorbestimmten Soll-Querschnitts des abzustützenden Schlingenpakets können Schwankungen des Abstands der einzelnen Bundelemente zueinander minimiert werden. Mit anderen Worten kann vermieden werden, dass bei elastischen Gelenkkörpern einer bestimmten Serie der Abstand zwischen benachbarten Bundelementen toleranzbedingt größer oder kleiner ist, was sich im Betrieb, insbesondere bei den auf Zug beanspruchten Schlingenpaketen massiv auf die Lebensdauer auswirken kann. Durch exaktes Einhalten der axialen Position der Bundelemente können derartige Schwankungen unterbunden werden.

Durch den modularen Aufbau der Stützeinrichtung mit den inneren und äußeren Bundelemente können alle Schlingenpakete vor dem Aufbringen auf die Buchsen gewickelt und anschließend wechselweise mit den Bundelementen auf der Buchse angeordnet werden. Das auf Zug beanspruchte Schlingenpaket wird zuerst auf die Buchse aufgeschoben und anschließend durch die inneren Bundelemente in einer vorbestimmten axialen Position und nach Maßgabe des Soll-Querschnitts des Schlingenpakets auf der Buchse befestigt. Darauffolgend werden die beiden auf Schub belasteten, axial äußeren Schlingenpakete auf die Buchse aufgeschoben. Diese beiden parallelen Schlingenpakete werden durch die beiden axial äußeren Bundelemente befestigt, die jeweils den Abschluss der Stützeinrichtung bilden.

Um bei kardanischen Beanspruchungen den biegeelastischen Bereich der Schlingenpakete zu vergrößern, können gemäß einer bevorzugten Ausführungsform der Erfindung die äußeren Bundelemente als L-förmige Kragen ausgebildet sein, wobei wenigstens einer der Kragen eine in Umfangsrichtung unregelmäßige Kragenhöhe aufweist. So können die Bundelemente dort, wo die Schlingenpakete die jeweilige Buchse verlassen, mit reduzierter Kragenhöhe ausgebildet sein, wodurch der führungsfreie Abschnitt der Schlingenpakete zwischen den Buchsen vergrößert wird und damit auch der biegeelastische Bereich der Schlingenpakete. Durch diese Vergrößerung des biegeelastischen Bereichs der Schlingenpakete können punktuelle Belastungen der Fäden im Umfangsbereich der Kragen weiter reduziert werden. Zur Vermeidung einer scharfen Kante an dem voranstehenden beschriebenen Bereich der Kragen, sieht eine Weiterbildung der Erfindung vor, dass sich der Kragen zumindest abschnittsweise in einem Winkel ungleich 90° relativ zur Mittelachse der Buchsen erstreckt. Der Kragen wird dabei in Richtung des Buchsenendes gebogen, wodurch bei kardanischen Beanspruchungen des Gelenkkörpers ein punktuelles Zerreiben und Überdehnen der Schlingenpakete bzw. von einzelnen Fäden des Schlingenpakets verhindert wird.

Eine Alternative der Erfindung sieht vor, dass zumindest zwei der Bundelemente scheibenförmig ausgebildet sind.

Um das auf Zug beanspruchte Schlingenpaket in einer axial vorbestimmten Position relativ zu der Buchse zu positionieren und an den Soll-Querschnitt des abzustützenden Schlingenpakets anpassen zu können, sieht diese Alternative der Erfindung vor, dass die axial inneren Bundelemente scheibenförmig ausgebildet sind und mit einer Nut an zumindest einer Buchse positionierend zusammenwirken.

Gemäß einer bevorzugten Ausführungsform der Erfindung können die axial äußeren Bundelemente scheibenförmig ausgebildet und mit zumindest einer der Buchsen durch Vernieten verbunden werden. In diesem Fall werden die axial äußeren scheibenförmigen Bundelemente nicht auf die Buchsen aufgepresst, sondern dauerhaft mit der Buchse verrastet oder vernietet.

Zur Entlastung und Unterstützung der Schlingenpakete im Betrieb des Gelenkkörpers sieht eine bevorzugte Ausführungsform der Erfindung vor, dass zwischen zwei benachbarten Buchsen und im Abstand zu diesen ein Anschlagköper angeordnet werden kann. Wie voranstehend bereits erwähnt, werden die einzelnen Schlingenpakete während des Betriebs des Gelenkkörpers mit unterschiedlichen Kräften belastet. Wird ein Drehmoment mit dem Gelenkkörper übertragen, werden die zwischen zwei Buchsen verlaufenden Schlingenpakete entweder mit einer Schubkraft (Schubstrecke) oder mit einer Zugkraft (Zugstrecke) belastet, ebenso wird die gummielastische Ummantelung im Betrieb belastet. In der Schubstrecke bewegen sich zwei benachbarte Buchsen durch die Belastung aufeinander zu, wodurch die Schlingenpakete in der Schubstrecke gestaucht werden. Die Anschlagköper begrenzen diese Stauchung, da sie einen Anschlag bilden, an dem sich die Buchsen bzw. Schlingenpakete in der Schubstrecke abstützen können. Mit anderen Worten kann der elastische Gelenkkörper durch die Anschlagkörper größere Drehmomente übertragen oder bei gleichbleibender Drehmomentkapazität die Baugröße deutlich reduziert werden. Zudem bilden die Anschlagkörper eine Abstimmungsmöglichkeit für den Gelenkkörper, da durch ihre Positionierung, Dimensionierung und deren Kontur Einfluss auf die torsionale und kardanische Steifigkeit genommen werden kann.

Da die Buchsen in Umfangsrichtung in vorbestimmten Winkelabständen bezüglich einer Mittelachse des Gelenkkörpers angeordnet sind, sieht eine bevorzugte Ausführungsform der Erfindung vor, dass eine Mehrzahl von Anschlagkörpern ebenfalls in regelmäßigen Winkelabständen angeordnet ist.

Zur Abstützung der Schlingenpakete bzw. der Buchsen durch die Anschlagkörper über die gesamte Breite des Gelenkkörpers in axialer Richtung sieht eine Weiterbildung der Erfindung vor, dass die Mehrzahl der Anschlagkörper die gummielastische Ummantelung in axialer Richtung des Gelenkkörpers zumindest teilweise durchdringen. Durch die den Gelenkkörper durchdringenden Anschlagkörper entstehen ebenfalls verschiedene Möglichkeiten der Einbringung der Anschlagkörper in den Gelenkkörper, die im Folgenden beschrieben werden.

Um den Herstellungsprozess für einen Gelenkkörper mit Anschlagkörpern möglichst einfach zu gestalten, sind gemäß einer Ausführungsform der Erfindung die Anschlagkörper in die gummielastische Ummantelung einvulkanisiert oder in darin vorgesehene Ausnehmungen nach dem Vulkanisieren eingepresst. Werden die Anschlagkörper einvulkanisiert, können sie vor der Vulkanisation zusammen mit den Buchsen, den Schlingenpaketen sowie den Bundelementen zur axialen Abstützung der Schlingenpakete auf den Buchsen in einem Vulkanisationswerkzeug angeordnet, mit Gummi umspritzt, und anschließend durch das Vulkanisieren in dem Gelenkkörper fixiert werden. Werden die Anschlagkörper alternativ erst nach der Vulkanisation in Ausnehmungen des Gelenkkörpers eingepresst, so wird in dem Werkzeug eine den Abmaßen der Anschlagkörper entsprechende Ausnehmung vorgesehen und der Gelenkkörper vulkanisiert. Im Anschluss an die Vulkanisation werden die Anschlagkörper dann in die entsprechenden Ausnehmungen eingepresst, wobei der Querschnitt der Ausnehmungen derart gestaltet werden kann, dass der Anschlagkörper diese Ausnehmungen beim Einpressen elastisch aufweitet und durch Reibung dann gegen ein Herauswandern in axialer Richtung gesichert ist.

Gemäß einer bevorzugten Ausführungsform weisen die Anschlagkörper in Achsrichtung einen im Wesentlichen konstanten Querschnitt auf. Diese Ausführungsform der Anschlagkörper wird bevorzugt verwendet, falls die Anschlagkörper in den Gelenkkörper einvulkanisiert werden.

Alternativ zu dieser Ausführungsform kann vorgesehen sein, dass die Anschlagkörper einen sich zu ihrer Mitte hin verjüngenden Querschnitt aufweisen. Wie voranstehend bereits erwähnt, können die Anschlagkörper auch in Ausnehmungen in dem Gelenkkörper eingepresst werden. Um jedoch ein Herauswandern in axialer Richtung des Anschlagkörpers zu unterbinden, wird durch den sich verjüngenden Querschnitt eine axiale Sicherung in der Form einer Einrastfunktion oder "Klickfunktion" vorgesehen, bei der der Anschlagkörper in die entsprechende Ausnehmung "eingeklickt" werden kann. Mit anderen Worten korrespondiert der Querschnitt der Ausnehmungen in dem Gelenkkörper mit dem Querschnitt des Anschlagkörpers, um ihn in axialer Richtung gegen ein Herauswandern durch die im Betrieb eines Gelenkkörpers auftretenden Schwingungen bzw. Vibrationen zu sichern.

Da sich die Buchsen bzw. die die Buchsen umschlingenden Schlingenpakete in Betrieb des Gelenkkörpers an die Anschlagkörper annähern bzw. an diese anlegen können, sieht eine Weiterbildung der Erfindung vor, dass die Anschlagkörper in Richtung der Buchsen konkav gewölbt sind. Mit anderen Worten sind die Anschlagkörper an die Form bzw. den Radius der Buchsen und der die Buchsen umschlingenden Schlingenpakete angepasst.

Gemäß einer Weiterbildung der Erfindung sind die Anschlagkörper aus Metall, Kunststoff oder einem elastisch deformierbaren Material hergestellt.

Zur Herstellung des Gelenkkörpers bzw. zum Einbringen der Anschlagkörper in die in dem elastischen Gelenkkörper vorgesehenen Ausnehmungen ist zu erwähnen, dass die Anschlagkörper vor dem Einbringen in die jeweiligen Ausnehmungen elastisch streckbar sind, wodurch deren Querschnitt in Achsrichtung verkleinerbar ist, in gestrecktem Zustand in die jeweilige Ausnehmung einbringbar und nach dem Einbringen in die Ausnehmung aus ihrem gestrecktem Zustand freigebbar sind. Hierzu werden Anschlagkörper aus elastisch deformierbarem Material verwendet, die nach einer Streckung im Wesentlichen ihren ursprünglichen Querschnitt wieder annehmen. Gemäß einer bevorzugten Ausführungsform der Erfindung sind die Stützelemente aus Metall oder Kunststoff hergestellt.

Die Erfindung wird im Folgenden beispielhaft anhand der beiliegenden Figuren erläutert. Es stellen dar:
- Fig. 1: eine Draufsicht eines erfindungsgemäßen elastischen Gelenkkörpers;
- Fig. 2: eine perspektivische Ansicht einer Stützeinrichtung gemäß einer ersten Ausführungsform der Erfindung;
- Fig. 3: eine Schnittansicht der Stützeinrichtung gemäß der ersten Ausführungsform der Erfindung;
- Fig. 4: eine teilweise aufgeschnittene Seitenansicht eines elastischen Gelenkkörpers gemäß der ersten Ausführungsform der Erfindung;
- Fig. 5: eine perspektivische Teilansicht einer Stützeinrichtung mit Schlingenpaketen gemäß einer nicht zur Erfindung gehörenden Ausführungsform;
- Fig. 6: eine Schnittansicht der Stützeinrichtung gemäß einer nicht zur Erfindung gehörenden Ausführungsform;
- Fig. 7: eine teilweise aufgeschnittene Seitenansicht eines elastischen Gelenkkörpers gemäß der Ausführungsform nach Fig. 6;
- Fig. 8: eine perspektivische Teilansicht einer Stützanordnung mit Schlingenpaketen gemäß einer nicht zur Erfindung gehörenden Ausführungsform;
- Fig. 9: eine Schnittansicht einer Stützeinrichtung gemäß der Ausführungsform nach Fig. 8;
- Fig. 10: eine teilweise aufgeschnittene Seitenansicht eines elastischen Gelenkkörpers gemäß der Ausführungsform nach Fig. 8;
- Fig. 11: eine perspektivische Teilansicht einer Stützeinrichtung mit Schlingenpaketen gemäß einer alternativen Ausführungsform der Erfindung;
- Fig. 12: eine Schnittansicht der Stützeinrichtung gemäß der Ausführungsform der Erfindung nach Fig. 11;
- Fig. 13: eine teilweise aufgebrochene Seitenansicht eines elastischen Gelenkkörpers gemäß der Ausführungsform der Erfindung nach Fig. 11;
- Fig. 14: eine perspektivische Teilansicht einer Stützeinrichtung mit Schlingenpaketen gemäß einer weiteren Ausführungsform der Erfindung;
- Fig. 15: eine Schnittansicht der Stützeinrichtung gemäß der Ausführungsform der Erfindung nach Fig. 14;
- Fig. 16: eine teilweise aufgebrochene Seitenansicht eines elastischen Gelenkkörpers gemäß der Ausführungsform der Erfindung nach Fig. 14;
- Fig. 17: eine perspektivische Teilansicht einer Stützeinrichtung mit Schlingenpaketen gemäß einer weiteren Ausführungsform der Erfindung;
- Fig. 18: eine Schnittansicht der Stützeinrichtung gemäß der Ausführungsform der Erfindung nach Fig. 17;
- Fig. 19: eine teilweise aufgebrochene Seitenansicht eines elastischen Gelenkkörpers gemäß der Ausführungsform der Erfindung nach Fig. 17;
- Fig. 20: eine perspektivische Ansicht eines elastischen Gelenkkörpers gemäß einer weiteren Ausführungsform der Erfindung;
- Fig. 21: eine Vorderansicht eines Gelenkkörpers gemäß der Ausführungsform der Erfindung nach Fig. 20;
- Fig. 22: eine Seitenansicht eines Gelenkkörpers gemäß der Ausführungsform der Erfindung nach Fig. 20;
- Fig. 23: eine perspektivische Ansicht eines Anschlagkörpers gemäß der Ausführungsform der Erfindung nach Fig. 20; und

- Fig. 24: eine perspektivische Ansicht eines Anschlagkörpers gemäß der Ausführungsform der Erfindung nach Fig. 20.

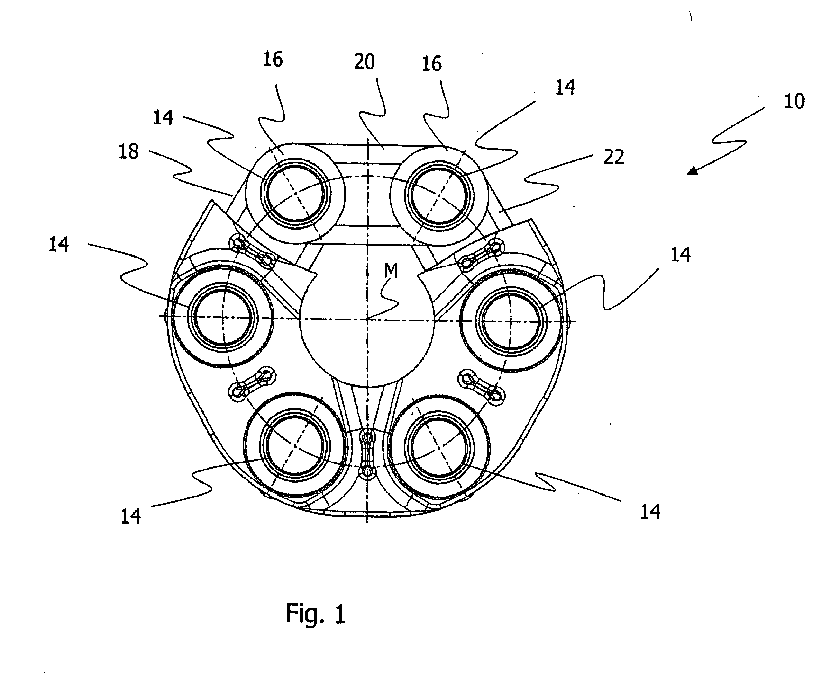

Fig. 1 zeigt eine teilweise aufgebrochene Draufsicht eines erfindungsgemäßen elastischen Gelenkkörpers 10 mit sechs von einer gummielastischen Ummantelung 12 umgebenen Buchsen 14. Die Buchsen 14 sind in Umfangsrichtung bezüglich einer Mittelachse M in vorbestimmten Winkelabständen des Gelenkkörpers 10 angeordnet. In dem in der Zeichnung aufgeschnitten dargestellten Bereich des Gelenkkörpers 10 gemäß Fig. 1 erkennt man die Bundelemente 16 an den Buchsen 14, die zur axialen Abstützung der Schlingenpakete 18, 20 und 22 angeordnet sind.

Aus Fig. 1 erkennt man zudem, das eine einzelne Buchse 14 jeweils von mehreren Schlingenpaketen 18, 20 bzw. 20, 22 umschlungen ist. Dabei kann vorgesehen sein, dass die Schlingenpakete 18, 22 im in eine Wellenanordnung eingebauten Zustand des Gelenkkörpers 10 durch eine Zugkraft beansprucht werden, während das Schlingenpaket 20 und ein in Fig. 1 nicht gezeigtes in der Gummiummantelung 12 eingebettetes paralleles weiteres Schlingenpaket auf Druck bzw. Schub belastet werden.

Die Schlingenpakete 18, 20, 22 und das in Fig. 1 nicht gezeigte Schlingenpaket sowie eine Stützeinrichtung zu deren Abstützung werden im weiteren Verlauf mit Bezug auf die folgenden Figuren detailliert beschrieben.

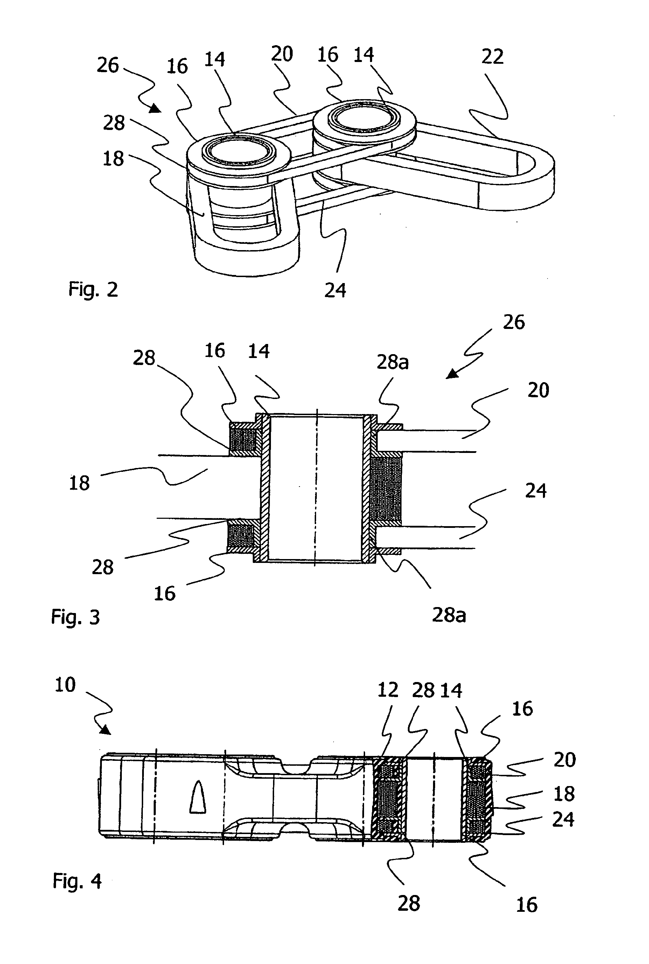

Fig. 2 zeigt eine perspektivische Darstellung einer an den Buchsen 14 angeordneten Stützeinrichtung 26 mit den äußeren Bundelementen 16 und mit in dieser Figur nur abschnittsweise sichtbaren inneren Bundelementen 28. Aus Fig. 2 erkennt man wiederum, dass die Buchsen 14 von mehreren Schlingenpaketen 18, 20, 24 bzw. 20, 22, 24 umschlungen werden. Zwischen den inneren Bundelementen 28 ist ein auf Zug belastetes Schlingenpaket 18 mit vergrößertem Querschnitt aufgenommen. Zwischen den inneren Bundelementen 28 und den axial äußeren Bundelementen 16 sind auf der Buchse 14 zwei parallele, auf Schub bzw. Druck belastbare Schlingenpakete 20, 24 angeordnet.

Durch die inneren Bundelemente 28 und die äußeren Bundelemente 16 werden die einzelnen Schlingenpakete 18, 20, 22, 24 in axialer Richtung in dem im Betrieb des Gelenkkörpers 10 stark belasteten Umfangsbereich der Buchsen 14 axial abgestützt. Dadurch kann der Traganteil der einzelnen Schlingenpakete 18, 20, 22, 24 in diesem Bereich deutlich erhöht werden. Die inneren Bundelemente 28 trennen zudem die im Einsatzfall mit unterschiedlichen Kräften belasteten Schlingenpakete - die mit einer Zugkraft belasteten Schlingenpakete 18, 22 und Schubkraft belasteten Schlingenpakete 20, 24 - voneinander. Durch die Trennung der unterschiedlich belasteten Schlingenpakete 18, 20, 22, 24 werden sich negativ auf die Lebensdauer auswirkende Reibungswirkungen zwischen den Schlingenpaketen 18, 20, 22, 24 vermieden, d.h. ein Reiben der Schlingenpakete 18, 20, 22, 24 aus gleichen Materialien aneinander wird unterbunden.

Aus Fig. 2 lässt sich der modulare Aufbau der Stützeinrichtung 26 erkennen, der den Herstellungsprozess des elastischen Gelenkkörpers 10 deutlich vereinfacht und beschleunigt. Die Schlingenpakete 18, 20, 22 und 24 werden separat vor der Montage gewickelt. Dadurch können herkömmliche Wickelmaschinen genutzt werden, da diese die Buchsen 14 zur Wicklung der Schlingenpakete nicht mit aufnehmen müssen. Bei der Montage werden die vorgefertigten Schlingenpakete auf die Buchsen 14 aufgeschoben und durch die axialen Abschnitte der Bundelemente 16, 28 axial positioniert. Die auf Zug belasteten Schlingenpakete 18, 22 werden zuerst auf die Buchsen 14 aufgeschoben und anschließend durch die inneren Bundelemente 28 nach Maßgabe eines vorbestimmten Soll-Querschnitts des auf Zug belasteten Schlingenpakets 18, 22 auf der Buchse 14 axial befestigt. Im Anschluss daran werden die vorgefertigten, axial äußeren auf Schub belasteten Schlingenpakete 20, 24 auf die Buchsen 14 aufgeschoben und durch die axial äußeren Bundelemente 16 ebenfalls nach Maßgabe eines vorbestimmten Soll-Querschnitts axial positioniert.

Fig. 3 zeigt eine Schnittansicht der Stützeinrichtung 26 gemäß der ersten Ausführungsform der Erfindung. Die inneren Bundelemente 28 und die äußeren Bundelemente 16 sind gemäß der ersten Ausführungsform als L-förmige Kragen ausgebildet. Das auf Zug belastete Schlingenpaket 18 wird durch die inneren L-förmigen Kragen 28 direkt auf der Buchse 14 um diese herumgeführt und axial durch die Kragen 28 abgestützt.

Ferner erkennt man aus Fig. 3, dass die inneren L-förmigen Kragen 28 mit ihrem an den Buchsen anliegenden axialen Abschnitt 28a an den Soll-Querschnitt der axial äußeren auf Schub belasteten Schlingenpakete 20, 24 angepasst sind. Die Schlingenpakete 20, 24 werden somit durch den an den Buchsen 14 anliegenden Abschnitt 28a der L-förmigen Kragen 28 um die Buchsen 14 herumgeführt. Die inneren L-förmigen Kragen 28 legen sich mit jeweils dem an den Buchsen anliegenden Abschnitt 28a an die äußere Bundelemente bzw. L-förmigen Kragen 16 an, d. h. die inneren L-förmigen Kragen 28 und die äußeren L-förmigen Kragen 16 bilden einen Abstützbereich für die auf Schub belasteten Schlingenpakete 20, 24.

Aus Fig. 3 wird auch der modulare Aufbau der Stützeinrichtung 26 zur Abstützung der Schlingenpakete 18, 20, 22 und 24 ersichtlich. Durch den modularen Aufbau der Stützeinrichtung 26, die durch Zusammensetzen der inneren und äußern Bundelemente 16 28 gebildet wird, können die Schlingenpakete 18, 20, 22, 24 separat vorgefertigt werden. Bei der Montage des Gelenkköpers 10 werden sie nacheinander zusammen mit den Bundelementen 16, 28 auf den Buchsen angeordnet und durch diese axial in einer vorbestimmten Position nach Maßgabe des Soll-Querschnitts der jeweiligen Schlingenpakete befestigt.

Fig. 4 zeigt eine teilweise aufgeschnittene Seitenansicht des elastischen Gelenkkörpers 10, wobei in dem aufgeschnittenen Bereich wiederum die Stützeinrichtung 26 erkennbar ist. Aus Fig. 4 wird ersichtlich, wie die Stützeinrichtung 26 bzw. die inneren Bundelemente 28 und die äußeren Bundelemente 16 sowie die einzelnen Schlingenpakete 18, 20, 22, 24 in die gummielastische Ummantelung 12 eingebettet sind.

Im Folgenden werden mit Bezug auf die weiteren Figuren weitere Ausführungsbeispiele der Erfindung erläutert. Zur Vermeidung von Wiederholungen und zur Vereinfachung der Beschreibung werden für gleichwirkende oder gleichartige Komponenten dieselben Bezugszeichen verwendet, wie im ersten Ausführungsbeispiel, jedoch mit einer fortlaufenden Ziffer vorangestellt.

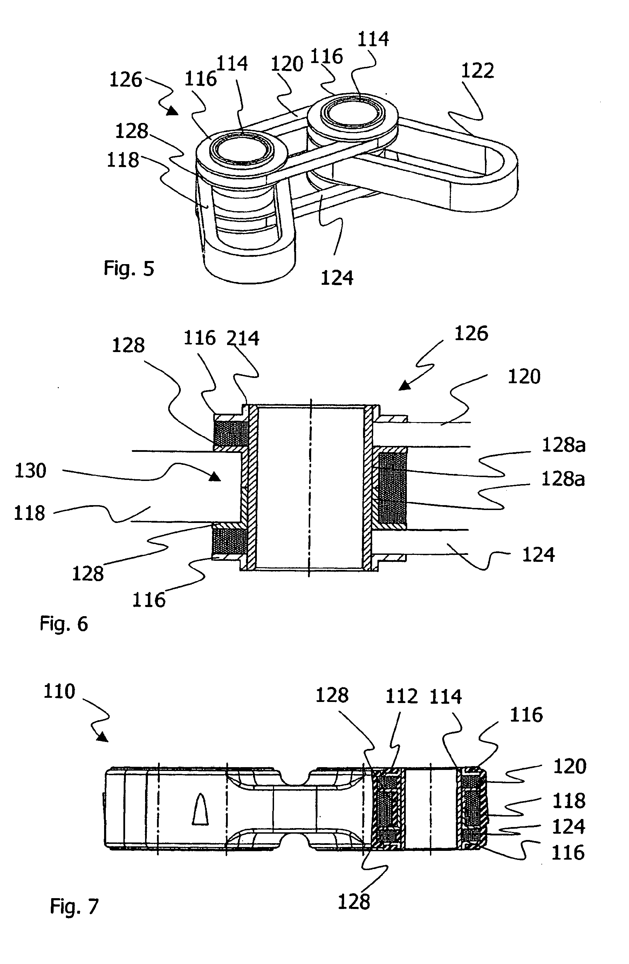

Fig. 5 zeigt eine perspektivische Ansicht einer nicht zur Erfindung gehörenden Ausführungsform mit einer Stützeinrichtung 126 und den diese bildenden äußeren Bundelementen 116 und inneren Bundelementen 128. Zwischen den inneren Bundelementen 128 verlaufen wiederum die auf Zug belasteten Schlingenpakete 118, 122, während zwischen den inneren Bundelementen 128 und den äußeren L-förmigen Bundelementen 116 die auf Schub belasteten Schlingenpakete 120, 124 verlaufen.

Fig. 6 zeigt eine Schnittansicht der an Buchse 114 angeordneten Stützanordnung 126. Wiederum weisen sowohl die inneren Bundelemente 128 als auch die äußeren Bundelemente 116 eine im Querschnitt L-förmige Kragenform auf. Der Unterschied zu der mit Bezug auf die Figuren 2 bis 4 beschriebenen ersten Ausführungsform liegt darin, dass die inneren L-förmigen Kragen 128 mit ihren an den Buchsen anliegenden Abschnitten 128a einander zugewandt sind und aneinander anliegen. Die inneren L-förmigen Kragen 128 bilden einen Abstützbereich 130 für das auf Zug belastete Schlingenpaket 118, das im Vergleich zu den auf Schub belasteten Schlingenpaketen 120, 124 einen vergrößerten Querschnitt aufweist. Das Schlingenpaket 118 wird durch den von den inneren L-förmigen Kragen gebildeten, in seiner axialen Weite vorbestimmten Abstützbereich 130 nach Maßgabe eines vorbestimmten Soll-Querschnitts des Schlingenpakets 118 auf der Buchse 114 positioniert und um diese herumgeführt bzw. axial abgestützt. Die beiden axial äußeren auf Schub belasteten Schlingenpakete 120 werden gemäß der zweiten Ausführungsform zwischen den inneren Bundelementen 128 und den äußeren L-förmigen Kragen 116 direkt auf der Buchse 114 um diese herumgeführt bzw. abgestützt.

Fig. 7 zeigt wiederum eine teilweise aufgeschnittene Ansicht des elastischen Gelenkkörpers 110. Es wird wiederum ersichtlich, wie die Stützeinrichtung 126 in dem elastischen Gelenkkörper 110 in die gummielastische Ummantelung 112 eingebettet ist.

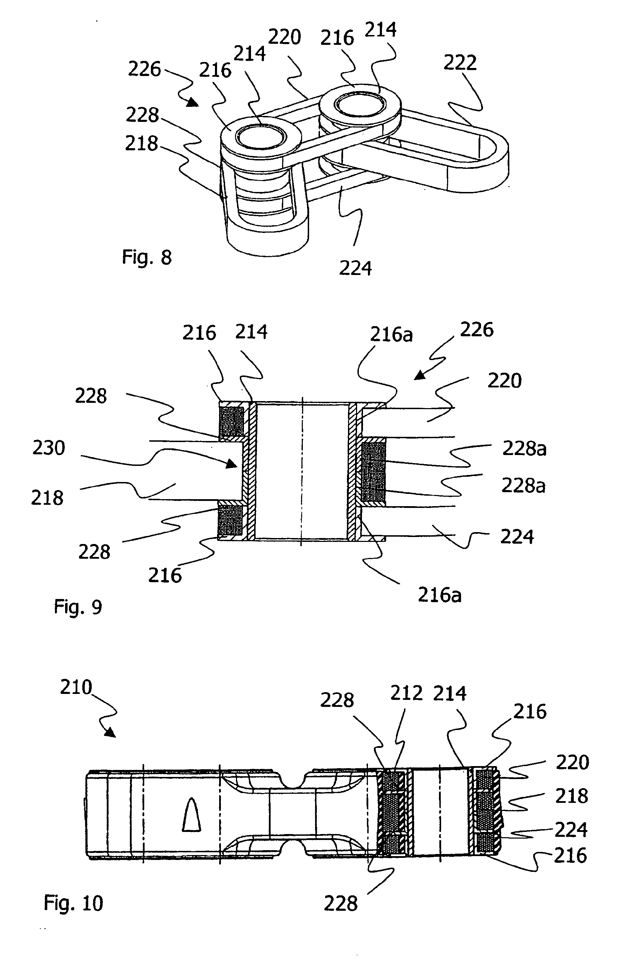

Fig. 8 zeigt eine perspektivische Ansicht der Stützeinrichtung 226 gemäß einer nicht zur Erfindung gehörenden Ausführungsform. Wie bereits aus dieser Ansicht ersichtlich wird, unterscheidet sich diese Ausführungsform von der mit Bezug auf die Figuren 5 bis 7 beschriebenen Ausführungsformen lediglich dadurch, dass die äußeren Bundelemente 216 mit ihrer L-förmigen Kragenform nicht in Richtung des Buchsenendes nach axial außen zeigen. Dies wird mit Bezug auf die Figuren 9 und 10 ersichtlich und detailliert erläutert.

Fig. 9 zeigt eine Schnittansicht der Stützeinrichtung 216 gemäß der Ausführungsform nach Fig. 8. Wie bei der voranstehend beschriebenen zweiten Ausführungsform bilden die inneren L-förmigen Kragen 228 mit ihren an den Buchsen 214 anliegenden Abschnitten 228a einen Abstützbereich 230 für das auf Zug belastete Schlingenpaket 218, d. h. die beiden inneren L-förmigen Kragen 228 sind mit ihren an den Buchsen 214 anliegenden Bereichen 228a einander zugewandt. Der Abstützbereich 230 wird nach Maßgabe des Soll-Querschnitts des auf Zug belasten Schlingenpaketes 218 ausgelegt.

Aus Fig. 9 wird ferner der Unterschied zu den voranstehend beschriebenen Ausführungsformen deutlich. Die äußeren Bundelemente bzw. L-förmige Kragen 216 sind mit ihren - im Gegensatz zu den voranstehend beschriebenen Ausführungsformen erkennbar vergrößerten - an den Buchsen 214 anliegenden Abschnitt 216a nicht mehr in Richtung des Buchsenendes der Buchsen 214 gerichtet, sondern nach innen in Richtung der inneren Bundelemente 228. Die äußeren L-förmigen Kragen 216 legen sich mit ihren an den Buchsen anliegenden Abschnitt an die inneren Bundelemente 128 an. Die axial äußeren auf Schub belasteten Schlingenpakete 222, 224 werden von einem zwischen den inneren Bundelementen 228 und den äußeren L-förmigen Kragen 216 gebildeten Abstützbereich geführt. Die äußeren L-förmigen Kragen 216 weisen demnach einen an den Buchsen anliegenden Abschnitt 216a auf, der an den Soll-Querschnitt der Schlingenpakete 220, 224 angepasst die axiale Weite des Führungsbereichs bestimmt, und führen mit diesem die Schlingenpakete 220, 224 um die Buchsen herum.

Fig. 10 zeigt erneut eine teilweise aufgeschnittene Seitenansicht des elastischen Gelenkkörpers 210 mit der Stützeinrichtung 216, die in die gummielastische Ummantelung 212 eingebettet ist.

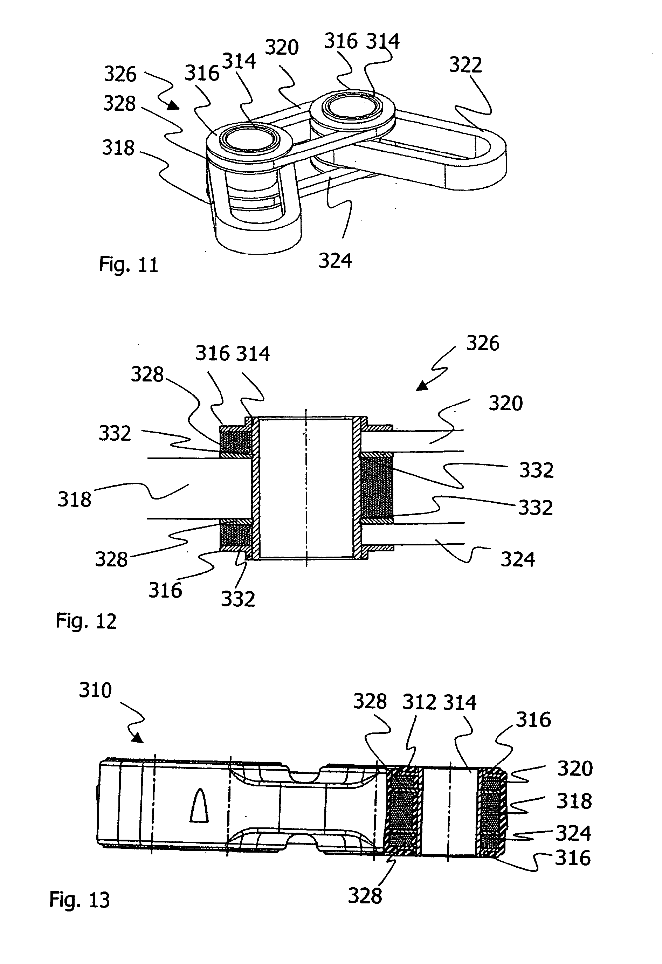

Fig. 11 zeigt eine perspektivische Ansicht gemäß einer weiteren Ausführungsform der Erfindung, die erneut die Stützeinrichtung 326 mit den durch diese abgestützten Schlingenpaketen 318, 320, 322, 324 zeigt. Die äußeren Bundelemente 316 gemäß dieser Ausführungsform sind wiederum nach außen in Richtung des Buchsenendes gerichtete L-förmige Kragen 316.

Fig. 12 zeigt eine Schnittansicht der Stützeinrichtung 326 gemäß der Ausführungsform der Erfindung nach Fig. 11. Die äußeren Bundelemente 316 sind L-förmige Kragen, die in Richtung des Buchsenendes der Buchse 314 axial nach außen gerichtet sind.

Zudem erkennt man aus Fig. 12, dass die inneren Bundelemente 328 eine Scheibenform aufweisen und mit einer an der Buchse 314 ausgebildeten Nut 332 positionierend zusammenwirken. Die Nuten 332 in der Buchse 314 werden nach Maßgabe eines Soll-Querschnitts des auf Zug belasteten Schlingenpakets 318 ausgebildet und nach Anordnung des Schlingenpakets 318 werden die scheibenförmigen Bundelemente 328 auf die Buchsen 314 aufgeschoben bis sie in die Nut 332 in der Buchse 314 greifen und so das Schlingenpaket 318 axial positionieren. Das Schlingenpaket 318 wird auf einen Buchsenabschnitt zwischen den beiden inneren scheibenförmigen Bundelementen 328 geführt. Zwischen den inneren Bundelementen 328 und den äußeren kragenförmigen Bundelementen werden die axial äußeren Schlingenpakete 320, 324 ebenfalls direkt auf der Buchse 314 um diese herumgeführt.

Fig. 13 zeigt eine teilweise aufgeschnittene Seitenansicht des elastischen Gelenkkörpers 310 mit einer in der gummielastischen Ummantelung 312 eingebetteten Stützeinrichtung 326.

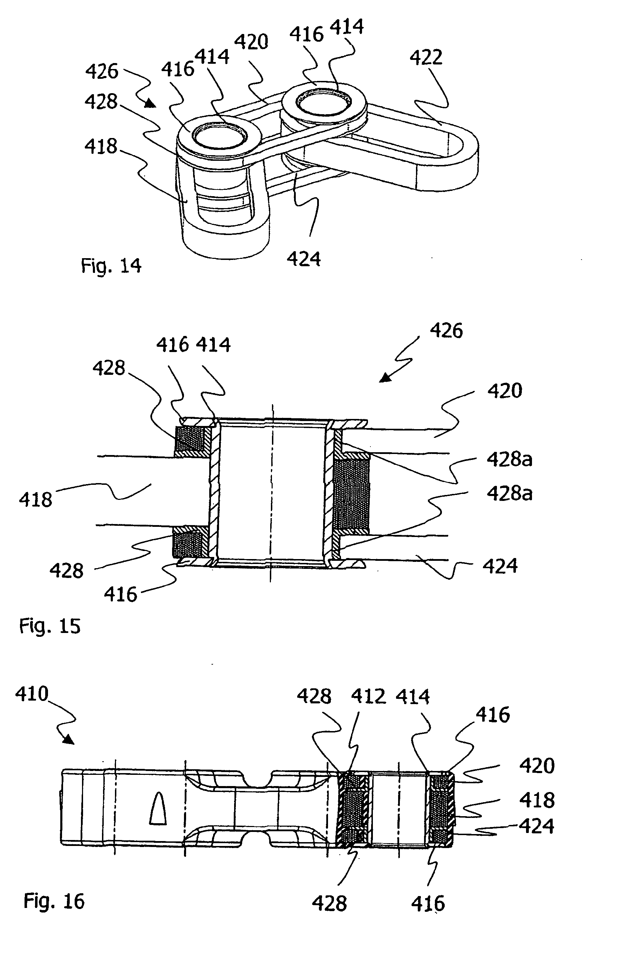

Fig. 14 zeigt eine perspektivische Ansicht der Stützeinrichtung 426 mit der durch diese abgestützten Schlingenpaketen 418, 420, 422, 424. Die äußeren Bundelemente 416 gemäß dieser Ausführungsform sind scheibenförmig ausgebildet.

Fig. 15 zeigt eine Schnittansicht der Stützeinrichtung 426 gemäß der Ausführungsform der Erfindung nach Fig. 14. Die äußeren scheibenförmig ausgebildeten Bundelemente 416 werden durch Vernieten mit der Buchse 414 dauerhaft verbunden. Die inneren kragenförmigen Bundelemente 428 legen sich mit ihren an den Buchsen anliegenden Abschnitt 428a an die äußeren scheibenförmigen Bundelemente 416 an. Der Abschnitt 428a der inneren Bundelemente 428 ist bei dieser Ausführungsform an den Soll-Querschnitt der axial äußeren auf Schub belasteten Schlingenpakete 420, 424 angepasst. Die äußeren Bundelemente 416 und die inneren Bundelemente 428 mit ihrem an den Buchsen 414 anliegenden Abschnitt 428a bilden somit einen Abstützbereich für die auf Schub belasteten Schlingenpakete 420 und 424. Das auf Zug belastete Schlingenpaket 418 wird zwischen den inneren Bundelementen 428 direkt auf der Buchse 414 um diese herumgeführt und abgestützt.

Fig. 16 zeigt wiederum eine teilweise aufgeschnittene Seitenansicht des elastischen Gelenkkörpers 410 mit der Stützeinrichtung 426, die gemäß dieser Ausführungsform nur teilweise in die gummielastische Ummantelung 412 eingebettet ist. Im Gegensatz zu den voranstehend beschriebenen Ausführungsbeispielen sind hier die äußeren scheibenförmigen Bundelemente 416 nicht vollständig in die gummielastische Ummantelung eingebettet bzw. ummantelt, können aber falls erwünscht an die gummielastische Ummantelung angebunden werden.

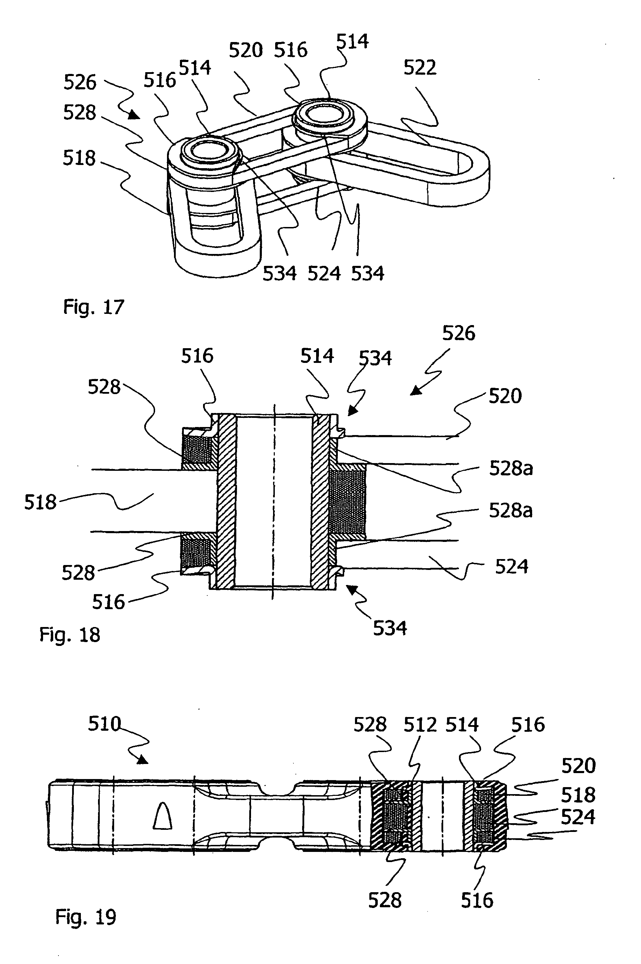

Fig. 17 zeigt eine perspektivische Ansicht der Stützeinrichtung 526 und den durch diese Stützeinrichtung 526 abgestützten Schlingenpaketen 518, 520, 522 und 524.

Aus Fig. 17 ist deutlich erkennbar, dass die äußeren Bundelemente 516 abschnittsweise von der durchgehend L-förmigen Kragenform abweichen. So ist der Abschnitt 534 der Kragen 516 in Richtung der nächsten benachbarten Buchse 514, die von den auf Schub belasteten Schlingenpaketen 520, 524 umschlungen wird, deutlich verkürzt ausgebildet. Zusätzlich ist dieser Abschnitt 534 des Kragens in Richtung des Buchsenendes nach axial oben geneigt. Durch diese Ausbildung der äußeren Bundelemente 516 wird der biegeelastische Bereich der auf Schub belasteten Schlingenpakete 520, 524 deutlich vergrößert. Bei kardanischen Beanspruchungen können die Schlingenpakete 520 und 524 daher in einem größeren Bereich Biege- bzw. Streckbelastungen aufnehmen, was sich positiv auf die Lebensdauer der auf Schub belasteten Schlingenpakete 520, 524 bzw. des Gelenkkörpers 510 auswirkt. Die Biegung der Kragen 516 im Abschnitt 534, die sich in einem zu 90° ungleichen Winkel zur Achse der Buchsen (nicht gezeigt) erstrecken, ermöglicht im Belastungsfall ein sanftes "Auslaufen" der auf Schub belasteten Schlingenpakete an der Buchse 514 mit den Kragen 516, da eine scharfe Kante in diesem Abschnitt 534 vermieden wird, an der die Schlingenpakete 520, 524 durch die kardanischen Beanspruchungen verschlissen werden können.

Fig. 18 zeigt eine Schnittansicht der Stützeinrichtung 526 gemäß der Ausführungsform der Erfindung nach Fig. 17. In Fig. 18 ist deutlich zu erkennen, dass der Abschnitt 534 der äußeren Kragen 526, der die auf Schub belasteten Schlingenpakete 520, 524 in Richtung der nächsten benachbarten Buchse führt, deutlich verkürzt ausgebildet ist. Die inneren Bundelemente 528 sind gemäß dieser sechsten Ausführungsform wiederum als L-förmige Kragen ausgebildet und legen sich mit ihren an den Buchsen 514 anliegenden Abschnitt 528a an den äußeren Bundelementen an. Die äußeren Bundelemente 516 und die inneren Bundelemente 528 mit ihrem an den Buchsen anliegenden Abschnitten 528a bilden somit zwischen ihnen einen Abstützbereich für die auf Schub belasteten Schlingenpakete 520, 524.

Fig. 19 zeigt erneut eine teilweise aufgeschnittene Seitenansicht des Gelenkkörpers 510 in die gummielastische Ummantelung 512 eingebetteten Stützeinrichtung 526.

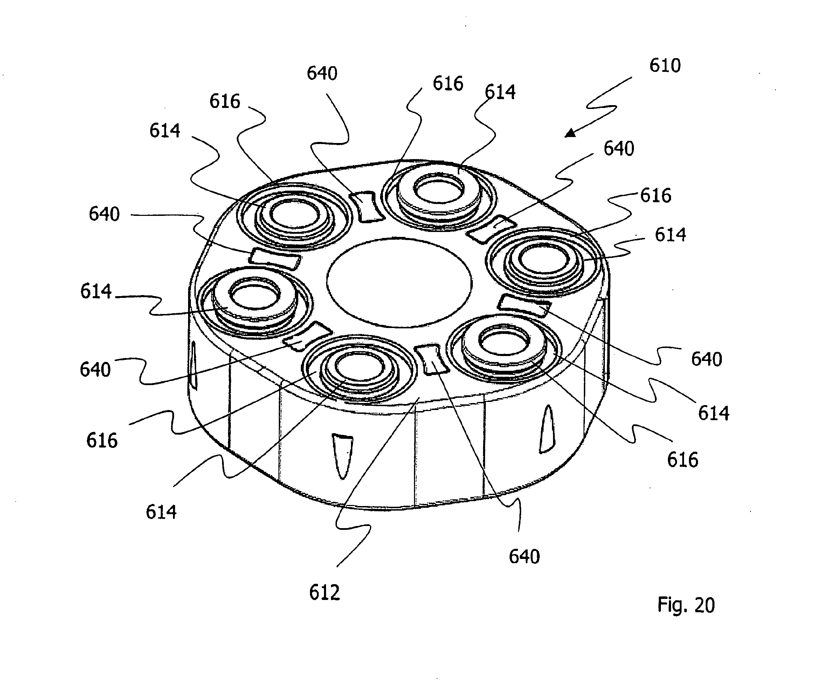

Fig. 20 zeigt eine perspektivische Ansicht einer weiteren Ausführungsform des elastischen Gelenkkörpers 610 gemäß der Erfindung. Aus Fig. 20 erkennt man, dass zwischen den Buchsen 614 mit den an diesen angeordneten Bundelementen 616 Anschlagköper 640 zur Entlastung und Unterstützung der Schlingenpakete angeordnet sind. Die Anschlagkörper 640 sind in regelmäßigen Winkelabständen und beabstandet zu den Buchsen 614 angeordnet. Zudem wird aus Fig. 20 ersichtlich, dass die Anschlagkörper 640 sich durch den ganzen Gelenkkörper hindurch bis zur Oberfläche der gummielastischen Ummantelung 612 erstrecken.

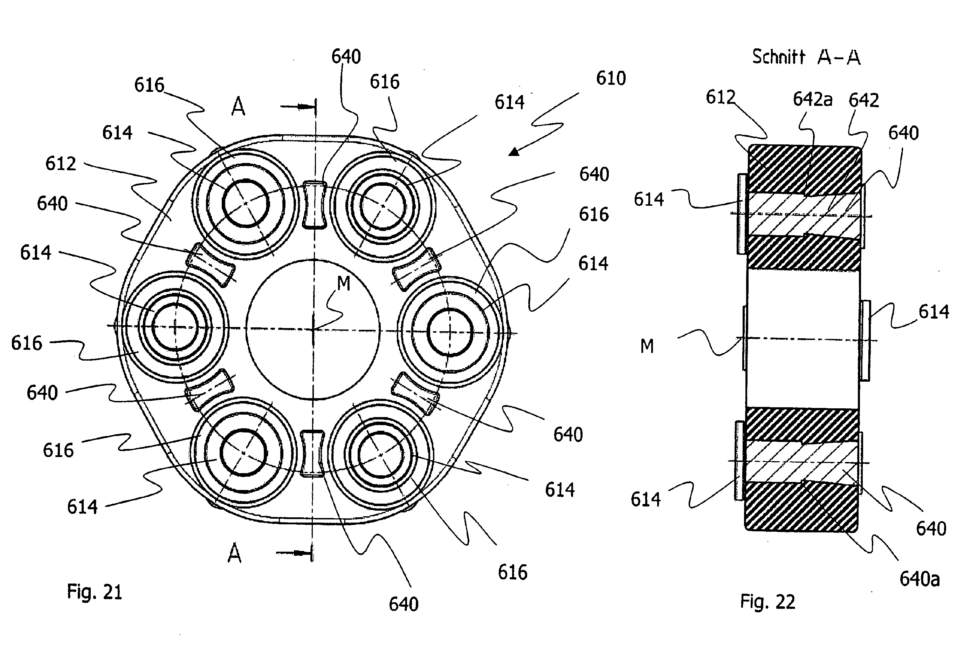

Fig. 21 ist eine Vorderansicht des Gelenkkörpers 610 mit den Anschlagkörper 640. Die Anschlagkörper 640 bilden eine Begrenzung für eine Relativbewegung der Buchsen 614 zueinander im Belastungsfall. Im Belastungsfall werden die auf Zug belasteten Schlingenpakete (hier nicht gezeigt) gedehnt und die auf Druck belasteten Schlingenpakete gestaucht. Diese Stauchung bzw. Dehnung wird durch die Anschlagkörper 620 begrenzt, da sich die Buchsen 614 an den Anschlagkörpern 640 abstützen.

Im Betrieb wird der elastische Gelenkkörper 610 in bekannter Weise wechselseitig an zu verbindenden Wellenabschnitten angebracht. Wie voranstehend bereits mehrfach erwähnt, werden die Schlingenpakete durch unterschiedliche Kräfte beansprucht. Wird ein Drehmoment mit dem Gelenkkörper 610 übertragen, werden die zwischen zwei Buchsen 614 verlaufenden Schlingenpakete (hier nicht gezeigt) entweder mit einer Schubkraft (Schubstrecke) oder mit einer Zugkraft (Zugstrecke) belastet, ebenso wird die gummielastische Ummantelung 612 im Betrieb belastet. In der Schubstrecke bewegen sich zwei benachbarte Buchsen 614 durch die Belastung bei der Drehmomentübertragung aufeinander zu, wodurch die Schlingenpakete in der Schubstrecke gestaucht werden. In der Zugstrecke werden die Schlingenpakete während der Drehmomentübertragung gedehnt. Die Anschlagköper 640 begrenzen die Dehnung bzw. die Stauchung, da sie eine Art Anschlag bilden, an dem sich die Buchsen 614 bzw. die Schlingenpakete abstützen können. Dadurch wird die Kapazität zur Drehmomentaufnahme erhöht oder alternativ kann bei gleichbleibender Drehmomentkapazität die Baugröße des elastischen Gelenkkörpers verkleinert werden. Alternativ kann bei gleichbleibender Drehmomentkapazität die Baugröße des elastischen Gelenkkörpers 610 verkleinert werden.

Die Anschlagkörper 640 sind konstruktiv derart gestaltet und in dem Gelenkkörper 610, den sie zumindest teilweise durchdringen, angeordnet, dass sich eine günstige Flächenpressung zwischen den Anschlagkörpern 640 und den Buchsen 614 bzw. den Schlingenpaketen einstellt. Dadurch können Spannungsspitzen in den Schlingenpaketen, hier nicht gezeigt, im Gelenkkörper 610 vermieden und die im Betrieb auftretenden mechanischen Belastungen gleichmäßiger im Gelenkkörper verteilt werden.

Aus Fig. 21 wird die konkave Auswölbung der Anschlagkörper 640 deutlich ersichtlich. Der Radius der Wölbung der Anschlagkörper 640 ist an den Radius der Bundelemente 616 bzw. der Buchsen 640 angepasst.

Wie insbesondere aus den Fig. 20 und 21 erkennbar ist, weisen die Bundelemente 616 einen U-förmigen Querschnitt auf. Es können jedoch auch Bundelemente 616 in Form eines Kragens, mit einer L-Form oder scheibenförmige Bundelemente 616 verwendet werden, da durch die Form der Bundelemente die Funktion der Erfindung nicht beeinflusst wird.

Fig. 22 zeigt eine Schnittansicht entlang der Schnittlinie A-A aus Fig. 21. Man erkennt aus Fig. 22 den Querschnitt der Anschlagköper 640, die hier in der gummielastischen Ummantelung 612 aufgenommen sind. Zur Vermeidung eines Herauswanderns aus der gummielastischen Ummantelung 612 weisen die Anschlagkörper 640 (in axialer Richtung von rechts in Fig. 22) einen sich bis zur Mitte verjüngenden Querschnitt auf, wodurch der Anschlagkörper 640 in der gummielastischen Ummantelung 612 umspritzt aufgenommen oder in diese nachträglich eingeklickt werden kann.

Wird der Anschlagkörper 640 in den Gelenkkörper 610 eingeklickt, so werden während des Umspritzens bzw. der Vulkanisation entsprechende Ausnehmungen 642 in der gummielastischen Ummantelung 612 in dem Gelenkkörper 610 vorgesehen. Mit anderen Worten weist die Ausnehmung 642 einen von einer Seite - in Fig. 3 von der rechten Seite in axialer Richtung der Buchsen 614 - konischen sich zur Mitte hin verjüngenden Querschnitt auf, wobei im Anschluss an den konischen Verlauf eine Kante 642a vorgesehen ist, nach der die Ausnehmung 642 in einem im Wesentlichen konstanten Querschnitt weiter verläuft. Der Anschlagkörper 640 weist einen entsprechenden Querschnitt auf, der sich von rechts bis zur Mitte hin verjüngt und nach einem Absatz 640a mit konstantem Durchmesser weiter verläuft. Durch den sich verjüngenden Querschnitt mit einem Absatz 640a am Anschlagkörper 640 bzw. der Kante 642a in der Ausnehmung 642 können die Anschlagkörper 640 in die Ausnehmung 642 eingesetzt bzw. "eingeklickt" und somit gegen ein Herauswandern in axialer Richtung gesichert werden. Zur axialen Sicherung der Anschlagkörper 640 in einer der Ausnehmungen 642 sind verschiedene Möglichkeiten denkbar, bevorzugt sind hierbei reibschlüssige oder formschlüssige Varianten.

Für die Anschlagkörper 640 können verschiedene Materialien, wie Kunststoff, Metall oder elastisch deformierbare Materialien verwendet werden.

Wird für die Anschlagkörper 640 ein elastisch deformierbares Material gewählt, das erst nach dem Vulkanisieren in eine entsprechende Ausnehmung 642 in der gummielastischen Ummantelung 612 eingepresst wird, so wird der Anschlagkörper 640 vor dem Einbringen in die jeweilige Ausnehmung 642 gestreckt, wodurch sich sein Querschnitt in Achsrichtung verkleinert. Anschließend wird der Anschlagkörper 640 in gestrecktem Zustand in die entsprechende Ausnehmung 642 eingebracht, d.h. mit verkleinertem Querschnitt. Nach dem Einbringen in die entsprechende Ausnehmung 642 und dem Erreichen der vorbestimmten Position in der Ausnehmung 642 wird der Anschlagkörper 640 aus seinem gestreckten Zustand freigegeben, wodurch er sich entspannt und damit seinen Querschnitt vergrößert und in die Ausnehmung 642 praktisch "eingepresst" ist.

Für die Anschlagkörper 640 sind unterschiedliche Materialien, Konturen oder auch Positionen denkbar, wodurch weitere Abstimmungsmöglichkeiten für den Gelenkkörper 610 entstehen. Der Gelenkkörper 610 ist somit flexibler an seine verschiedenen Einsatzgebiete anpassbar, d.h. an verschieden dimensionierte Antriebsstränge in verschiedenen Fahrzeugen oder auf verschiedene Drehmomentkapazitäten einstellbar. Zudem kann auch das Verhalten bei kardanischen Beanspruchungen durch die Anschlagkörper 640 beeinflusst werden, da hierbei ebenfalls die Steifigkeit des Gelenkkörpers 610 berücksichtigt werden muss.

Ferner zeigt Fig. 22, dass die Buchsen 614 wechselseitig endseitig verdickte Endabschnitte aufweisen, mit denen sie mit den hier nicht gezeigten Wellenabschnitten einer Wellenanordnung verbunden werden können.

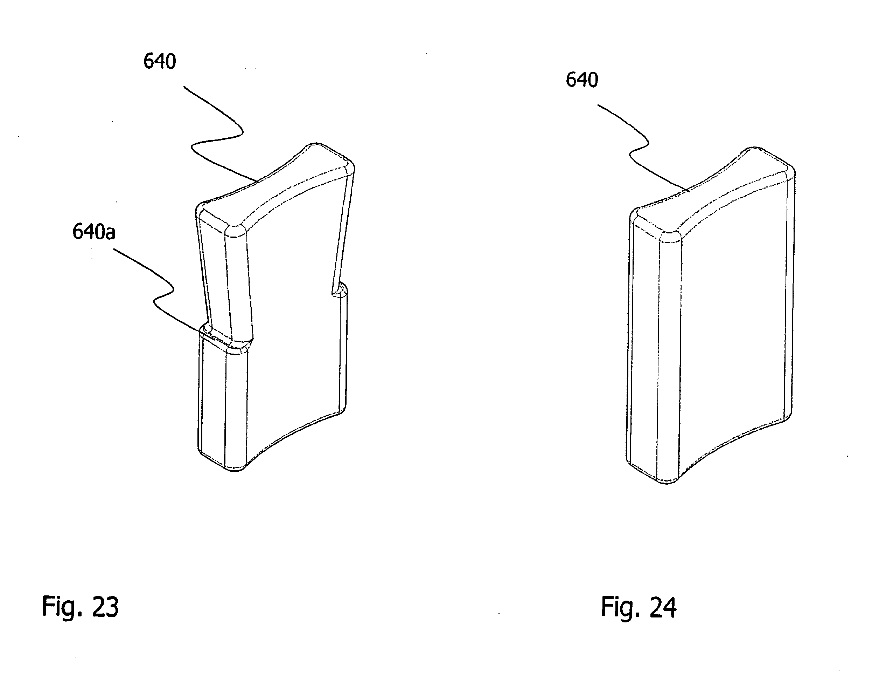

Fig. 23 und 24 zeigen perspektivische Ansichten der Anschlagkörper 640. Aus den Fig. 23 und 24 wird die konkave Ausbildung der Anschlagkörper 640 ersichtlich, womit sie an die Umfangsform der Buchsen 614 bzw. Bundelemente 616 mit Schlingenpaketen angepasst werden.

Fig. 24 zeigt wiederum den mit einer Hinterschneidung und dem Absatz 640a ausgebildeten Anschlagkörper 640.

Die voranstehend beschriebenen Ausführungsformen der Erfindung ermöglichen einen modularen Aufbau des Gelenkköpers mit einer zusammensetzbaren Stützeinrichtung, durch die die Schlingenpakete vorgefertigt und anschließend wechselweise mit den Bundelementen auf der Buchse angeordnet werden können und in einer vorbestimmten axialen Position nach Maßgabe eines Soll-Querschnitts der Schlingenpakete auf den Buchsen befestigt werden.

## Patentansprüche

1. Elastischer Gelenkkörper (10; 310; 410; 510; 610) für eine Wellenanordnung zum gelenkigen Verbinden zweier Wellenabschnitte mit
- einer Mehrzahl von Buchsen (14; 314; 414; 514; 614), die in Umfangsrichtung in vorbestimmten Winkelabständen bezüglich einer Mittelachse (M) des Gelenkkörpers (10; 310; 410; 510; 610) angeordnet sind,
- einer Mehrzahl von Schlingenpaketen (18, 20, 22, 24; 318, 320, 322, 324; 418, 420, 422, 424; 518, 520, 522, 524), wobei jedes Schlingenpaket (18, 20, 22, 24; 318, 320, 322, 324; 418, 420, 422, 424; 518, 520, 522, 524) jeweils zwei benachbarte Buchsen (14; 314; 414; 514; 614) umschlingt und jede Buchse (14; 314; 414; 514; 614) von wenigstens zwei Schlingenpaketen (18, 20, 22, 24; 318, 320, 322, 324; 418, 420, 422, 424; 518, 520, 522, 524) umschlungen wird, von denen das eine (18, 22; 318, 322; 418, 422; 518, 522) im Falle einer Drehmomentübertragung über die Wellenabschnitte auf Zug und das andere (20, 24; 320, 324; 420, 424; 520, 524) auf Schub belastbar ist,
- einer zur axialen Führung der Mehrzahl der Schlingenpakete (18, 20, 22, 24; 318, 320, 322, 324; 418, 420, 422, 424; 518, 520, 522, 524) auf wenigstens einer Buchse angeordneten Stützeinrichtung (26; 126; 226; 326; 426; 526), und
- einer gummielastischen Ummantelung (12; 312; 412; 512), in die die Schlingenpakete (18, 20, 22, 24; 318, 320, 322, 324; 418, 420, 422, 424; 518, 520, 522, 524), die Stützeinrichtungen (26; 326; 426; 526) und die Buchsen (14; 314; 414; 514; 614) zumindest teilweise eingebettet sind,
wobei die Stützeinrichtung (26; 326; 426; 526) durch Zusammensetzen von wenigstens zwei separat voneinander ausgebildeten, auf der Buchse (14; 314; 414; 514; 614) anbringbaren inneren Bundelementen (28; 328; 428; 528) und wenigstens zwei separat von den inneren Bundelementen (28; 328; 428; 528) und voneinander getrennt ausgebildeten, auf der Buchse (14; 314; 414; 514; 614) anbringbaren äußeren Bundelementen (16; 316; 416; 516; 616) gebildet wird, wobei die inneren Bundelemente (28; 328; 428; 528) dem auf Zug belasteten Schlingenpaket (18, 22; 318, 322; 418, 422; 518, 522) zugeordnet sind und von den inneren Bundelementen (28; 328; 428; 528) jeweils eines an entgegengesetzten axialen Enden des auf Zug belasteten Schlingenpakets (18, 22; 318, 322; 418, 422; 518, 522) anliegt, und wobei zwischen den inneren Bundelementen (28; 328; 428; 528) und den äußeren Bundelementen (16; 316; 416; 516; 616) zwei Schlingenpakete (20, 24; 320, 324; 420, 424; 520, 524) angeordnet sind, wobei die inneren Bundelementen (28; 328; 428; 528) und die äußeren Bundelemente (16; 316; 416; 516; 616) derart ausgebildet sind, dass ihre axiale Position nach Maßgabe eines vorbestimmten Soll-Querschnitts des abzustützenden Schlingenpakets (18, 22; 318, 322; 418, 422; 518, 522) auf der Buchse (14; 314; 414; 514; 614) festlegbar ist, wobei die abzustützenden Schlingenpakete (18, 22; 318, 322; 418, 422; 518, 522) und die äußeren Bundelemente (16; 316; 416; 516; 616) und die inneren Bundelemente (28; 328; 428; 528) derart ausgebildet sind, dass die Schlingenpakete (18, 22; 318, 322; 418, 422; 518, 522) und die äußeren Bundelemente (16; 316; 416; 516; 616) und die inneren Bundelemente (28; 328; 428; 528) wechselweise in axialer Richtung auf der Buchse (14; 314; 414; 514; 614) angeordnet sind,
**dadurch gekennzeichnet, dass** zumindest zwei der Bundelemente (316, 328; 416, 428) scheibenförmig ausgebildet sind, und die axial inneren Bundelemente (328) scheibenförmig ausgebildet sind und mit einer Nut (332) an zumindest einer Buchsen (314) positionierend zusammenwirken,
oder dass die axial inneren Bundelemente (16, 28; 316, 328; 416, 428; 516, 528) als im Querschnitt L-förmige Kragen ausgebildet sind, wobei deren an der Buchse (14) anliegende Abschnitte (28a) jeweils nach axial außen zu den axial äußeren Bundelementen (16) hin weisen, und wobei die axial inneren Bundelementen (16) auf zumindest einer der Buchsen (14; 314; 414; 514; 614) in einer Sollposition angebracht sind und sich jeweils mit den an der Buchse (14) anliegenden Abschnitten (28a) an die axial äußeren Bundelemente (16) in axialer Richtung anlegen.

2. Gelenkkörper (510) nach Anspruch 1,
**dadurch gekennzeichnet, dass** die äußeren Bundelemente (516) als L-förmige Kragen ausgebildet sind, wobei wenigstens einer der Kragen (516) eine in Umfangsrichtung unregelmäßige Kragenhöhe aufweist.

3. Gelenkkörper (510) nach Anspruch 2,
**dadurch gekennzeichnet, dass** sich der Kragen (516) zumindest abschnittsweise in einem Winkel ungleich 90° relativ zur Mittelachse (M) erstreckt.

4. Gelenkkörper (410) nach einem der Ansprüche 1 bis 3,
**dadurch gekennzeichnet, dass** die axial äußeren Bundelemente (428) scheibenförmig ausgebildet und mit zumindest einer der Buchsen (414) durch Vernieten verbunden sind.

5. Gelenkkörper (610) nach einem der vorangehenden Ansprüche,
**dadurch gekennzeichnet, dass** zwischen zwei benachbarten Buchsen (614) im Abstand zu diesen ein Anschlagkörper (640) angeordnet ist.

6. Gelenkköper (610) nach Anspruch 5,
**dadurch gekennzeichnet, dass** die eine Mehrzahl von Anschlagkörpern (640) in regelmäßigen Winkelabständen angeordnet ist.

7. Gelenkkörper (610) nach Anspruch 5 oder 6,
**dadurch gekennzeichnet, dass** die Mehrzahl der Anschlagkörper (640) die gummielastische Ummantelung (612) in axialer Richtung des Gelenkkörpers (610) zumindest teilweise durchdringt.

8. Gelenkkörper (610) nach einem der Ansprüche 5 bis 7,
**dadurch gekennzeichnet, dass** die Anschlagköper (640) in die gummielastische Ummantelung (612) einvulkanisiert oder in darin vorgesehene Ausnehmungen (640) nach dem Vulkanisieren eingepresst sind.

9. Gelenkkörper (610) nach einem der Ansprüche 5 bis 8,
**dadurch gekennzeichnet, dass** die Anschlagkörper (640) in Achsrichtung einen im wesentlichen konstanten Querschnitt aufweisen.

10. Gelenkkörper (610) nach einem der Ansprüche 5 bis 9,
**dadurch gekennzeichnet, dass** die Anschlagkörper (640) einen sich zu ihrer Mitte hin verjüngenden Querschnitt aufweisen.

11. Gelenkkörper (610) nach einem der Ansprüche 5 bis 10,
**dadurch gekennzeichnet, dass** die Anschlagkörper (640) in Richtung der Buchsen (614) konkav gewölbt sind.

12. Gelenkkörper (610) nach einem der Ansprüche 5 bis 11,
**dadurch gekennzeichnet, dass** die Anschlagkörper (640) aus Metall, Kunststoff oder einem elastisch deformierbaren Material hergestellt sind.

13. Gelenkkörper (610) nach Anspruch 8 und 12,
**dadurch gekennzeichnet, dass** die Anschlagkörper (640) vor dem Einbringen in die jeweilige Ausnehmung (642) elastisch streckbar sind, wodurch der deren Querschnitt in Achsrichtung verkleinerbar ist, in gestrecktem Zustand in die jeweilige Ausnehmung (642) einbringbar sind und nach dem Einbringen in die Ausnehmung (642) aus ihrem gestreckten Zustand freiggebbar sind.

14. Gelenkkörper (10; 110; 210; 310; 410; 510; 610) nach einem der vorangehenden Ansprüche,
**dadurch gekennzeichnet**, das die Bundelemente (16, 28; 116, 128; 216, 228; 316, 328; 416, 428; 516, 528; 616) aus Metall oder Kunststoff hergestellt sind.

## Claims

1. An elastic joint body (10; 310; 410; 510; 610) for a shaft arrangement for the articulated connection of two shaft sections having:
- a plurality of bushings (14; 314; 414; 514; 614) which are arranged in the circumferential direction at predetermined angular spacings with respect to a centre axis (M) of the joint body (10; 310; 410; 510; 610),
- a plurality of loop bundles (18, 20, 22, 24; 318, 320, 322, 324; 418, 420, 422, 424; 518, 520, 522, 524), with each loop bundle (18, 20, 22, 24; 318, 320, 322, 324; 418, 420, 422, 424; 518, 520, 522, 524) looping around two adjacent bushings (14; 314; 414; 514; 614) in each case and each bushing (14; 314; 414; 514; 614) being looped around by at least two loop bundles (18, 20, 22, 24; 318, 320, 322, 324; 418, 420, 422, 424; 518, 520, 522, 524) of which one (18, 22; 318, 322; 418, 422; 518, 522) may be subjected to a tensile load and the other (20, 24; 320, 324; 420, 424; 520, 524) to a thrust load in the event of a torque transmission via the shaft sections,
- a support device (26; 126; 226; 326; 426; 526) which is arranged on at least one bushing for axially guiding the plurality of loop bundles (18, 20, 22, 24; 318, 320, 322, 324; 418, 420, 422, 424; 518, 520, 522, 524), and
- a rubber-elastic casing (12; 312; 412; 512) into which the loop bundles (18, 20, 22, 24; 318, 320, 322, 324; 418, 420, 422, 424; 518, 520, 522, 524), the support devices (26; 326; 426; 526) and the bushings (14; 314; 414; 515; 614) are at least partially embedded,
wherein the support device (26; 326; 426; 526) is formed by assembling at least two mutually separately formed inner collar elements (28; 328; 428; 528) which may be mounted on the bushing (14; 314; 414; 514; 614) and at least two outer collar elements (16; 316; 416; 516; 616) which are formed separately from the inner collar elements (28; 328; 428; 528) and from one another and may be mounted on the bushing (14; 314; 414; 514; 614), wherein the inner collar elements (28; 328; 428; 528) are associated with the tensile-loaded loop bundle (18, 22; 318, 322; 418, 422; 518, 522) and, of the inner collar elements (28; 328; 428; 528), one abuts in each case against opposite axial ends of the tensile-loaded loop bundle (18, 22; 318, 322; 418, 422; 518, 522), and wherein two loop bundles (20, 24; 320, 324; 420, 424; 520, 524) are arranged between the inner collar elements (28; 328; 428; 528) and the outer collar elements (16; 316; 416; 516; 616), with the inner collar elements (28; 328; 428; 528) and the outer collar elements (16; 316; 416; 516; 616) being formed in such a way that their axial position relative to the bushing (14; 314; 414; 514; 614) can be specified according to a predetermined nominal cross-section of the loop bundle (18, 22; 318, 322; 418, 422; 518, 522) to be supported, with the loop bundles (18, 22; 318, 322; 418, 422; 518, 522) to be supported and the outer collar elements (16; 316; 416; 516; 616) and the inner collar elements (28; 328; 428; 528) being formed in such a way that the loop bundles (18, 22; 318, 322; 418, 422; 518, 522) and the outer collar elements (16; 316; 416; 516; 616) and the inner collar elements (28; 328; 428; 528) are arranged alternately in the axial direction on the bushing (14; 314; 414; 514; 614),
**characterised in that** at least two of the collar elements (316, 328; 416, 428) are formed in a disc shape and the axially inner collar elements (328) are formed in a disc shape and cooperate in positioning manner with a groove (322) on at least one bushing (314),
or **in that** the axially inner collar elements (16, 28; 316, 328; 416, 428; 516, 528) are formed as collars with an L-shaped cross-section, wherein their portions (28a) which abut against the bushing (14) each face axially outwards towards the axially outer collar elements (16), and wherein the axially inner collar elements (16) are attached in a nominal position on at least one of the bushings (14; 314; 414; 514; 614) and lie in each case such that the portions (28a) which abut against the bushing (14) are in contact with the axially outer collar elements (16) in the axial direction.

2. A joint body (510) according to Claim 1,
**characterised in that** the outer collar elements (516) are formed as L-shaped collars, with at least one of the collars (516) having an irregular collar height in the circumferential direction.

3. A joint body (510) according to Claim 2,
**characterised in that** the collar (516) extends at least in portions at an angle not equal to 90° relative to the centre axis (M).

4. A joint body (410) according to one of Claims 1 to 3,
**characterised in that** the axially outer collar elements (428) are formed in a disc shape and are connected to at least one of the bushings (414) by riveting.

5. A joint body (610) according to one of the preceding claims,
**characterised in that** a stop body (640) is arranged between two adjacent bushings (614) at a spacing therefrom.

6. A joint body (610) according to Claim 5,
**characterised in that** a plurality of stop bodies (640) is arranged at regular angular spacings.

7. A joint body (610) according to Claim 5 or 6,
**characterised in that** the plurality of the stop bodies (640) at least partially penetrates the rubber-elastic casing (612) in the axial direction of the joint body (610).

8. A joint body (610) according to one of Claims 5 to 7,
**characterised in that** the stop bodies (640) are vulcanised into the rubber-elastic casing (612) or pressed into recesses (642) provided therein after the vulcanisation.

9. A joint body (610) according to one of Claims 5 to 8,
**characterised in that** the stop bodies (640) have a substantially constant cross-section in the axial direction.

10. A joint body (610) according to one of Claims 5 to 9,
**characterised in that** the stop bodies (640) have a cross-section which tapers towards their centre.

11. A joint body (610) according to one of Claims 5 to 10,
**characterised in that** the stop bodies (640) are concavely arched in the direction of the bushings (614).

12. A joint body (610) according to one of Claims 5 to 11,
**characterised in that** the stop bodies (640) are made from metal, plastic or an elastically deformable material.

13. A joint body (610) according to Claim 8 and 12,
characterised n that the stop bodies (640) may be elastically stretched prior to their insertion into the respective recess (642), so that their cross-section may be reduced in the axial direction, they may be inserted into the respective recess (642) in the stretched state and may be released from their stretched state after their insertion into the recess (642).

14. A joint body (10; 110; 210; 310; 410; 510; 610) according to one of the preceding claims,
**characterised in that** the collar elements (16, 28; 116, 128; 216, 228; 316, 328; 416, 428; 516, 528; 616) are made from metal or plastic.

## Revendications

1. Corps d'articulation élastique (10 ; 310 ; 410 ; 510 ; 610) pour un agencement d'arbre, destiné à la liaison articulée de deux portions d'arbre, comportant
- une pluralité de douilles (14 ; 314 ; 414 ; 514 ; 614) qui sont disposées en direction circonférentielle à des intervalles angulaires prédéterminés par rapport à un axe médian (M) du corps d'articulation (10 ; 310 ; 410 ; 510 ; 610),
- une pluralité de paquets de boucles (18, 20, 22, 24 ; 318, 320, 322, 324 ; 418, 420, 422, 424 ; 518, 520, 522, 524), chaque paquet de boucles (18, 20, 22, 24 ; 318, 320, 322, 324 ; 418, 420, 422, 424 ; 518, 520, 522, 524) étant enroulé autour de deux douilles voisines (14 ; 314 ; 414 ; 514 ; 614) et au moins deux paquets de boucles (18, 20, 22, 24 ; 318, 320, 322, 324 ; 418, 420, 422, 424 ; 518, 520, 522, 524) étant enroulés autour de chaque douille (14 ; 314 ; 414 ; 514 ; 614), dont l'un (18, 22 ; 318, 322 ; 418, 422 ; 518, 522) peut être sollicité en traction et l'autre (20, 24 ; 320, 324 ; 420, 424 ; 520, 524) en poussée dans le cas d'une transmission de couple par les portions d'arbre,
- un moyen d'appui (26 ; 126 ; 226 ; 326 ; 426 ; 526) disposé sur au moins une douille pour le guidage axial de la pluralité de paquets de boucles (18, 20, 22, 24 ; 318, 320, 322, 324 ; 418, 420, 422, 424 ; 518, 520, 522, 524) et
- une enveloppe élastique (12 ; 312 ; 412 ; 512) dans laquelle les paquets de boucles (18, 20, 22, 24 ; 318, 320, 322, 324 ; 418, 420, 422, 424 ; 518, 520, 522, 524), les moyens d'appui (26 ; 326 ; 426 ; 526) et les douilles (14 ; 314 ; 414 ; 514 ; 614) sont enrobés au moins partiellement,
le moyen d'appui (26 ; 326 ; 426 ; 526) étant formé par assemblage d'au moins deux éléments de collet intérieurs (28 ; 328 ; 428 ; 528) réalisés séparément l'un de l'autre, pouvant être placés sur la douille (14 ; 314 ; 414 ; 514 ; 614) et d'au moins deux éléments de collet extérieurs (16 ; 316 ; 416 ; 516 ; 616) réalisés séparément des éléments de collet intérieurs (28 ; 328 ; 428 ; 528) et l'un de l'autre, pouvant être placés sur la douille (14 ; 314 ; 414 ; 514 ; 614), les éléments de collet intérieurs (28 ; 328 ; 428 ; 528) étant associés au paquet de boucles sollicité en traction (18, 22 ; 318, 322 ; 418, 422 ; 518, 522) et un des éléments de collet intérieurs (28 ; 328 ; 428 ; 528) s'appuyant respectivement sur des extrémités axiales opposées du paquet de boucles sollicité en traction (18, 22 ; 318, 322 ; 418, 422 ; 518, 522), et deux paquets de boucle (20, 24 ; 320, 324 ; 420, 424 ; 520, 524) étant disposés entre les éléments de collet intérieurs (28 ; 328 ; 428 ; 528) et les éléments de collet extérieurs (16 ; 316 ; 416 ; 516 ; 616), les éléments de collet intérieurs (28 ; 328 ; 428 ; 528) et les éléments de collet extérieurs (16 ; 316 ; 416 ; 516 ; 616) étant réalisés de façon que leur position axiale puisse être définie en fonction d'une section nominale prédéterminée du paquet de boucles (18, 22 ; 318, 322 ; 418, 422 ; 518, 522) à soutenir sur la douille (14 ; 314 ; 414 ; 514 ; 614), les paquets de boucles (18, 22 ; 318, 322 ; 418, 422 ; 518, 522) à soutenir, les éléments de collet extérieurs (16 ; 316 ; 416 ; 516 ; 616) et les éléments de collet intérieurs (28 ; 328 ; 428 ; 528) étant réalisés de sorte que les paquets de boucles (18, 22 ; 318, 322 ; 418, 422 ; 518, 522), les éléments de collet extérieurs (16 ; 316 ; 416 ; 516 ; 616) et les éléments de collet intérieurs (28 ; 328 ; 428 ; 528) soient disposés alternativement sur la douille (14 ; 314 ; 414 ; 514 ; 614) en direction axiale,
**caractérisé en ce qu'**au moins deux des éléments de collet (316, 328 ; 416, 428) sont réalisés en forme de disque, et les éléments de collet intérieurs axialement (328) sont réalisés en forme de disque et coopèrent de manière positionnante avec une rainure (332) sur au moins une douille (314),
ou que les éléments de collet intérieurs axialement (16, 28 ; 316, 328 ; 416, 428 ; 516, 528) sont réalisés sous la forme d'épaulements en L en section, leurs portions (28a) qui s'appuient sur la douille (14) étant dirigées chaque fois vers l'extérieur axialement par rapport aux éléments de collet extérieurs axialement (16), et les éléments de collet intérieurs axialement (16) étant placés dans une position nominale sur au moins une des douilles (14 ; 314 ; 414 ; 514 ; 614) et s'appliquant en direction axiale sur les éléments de collet extérieurs axialement (16) chaque fois par les portions (28a) qui s'appuient sur la douille (14).

2. Corps d'articulation (510) selon la revendication 1,
**caractérisé en ce que** les éléments de collet extérieurs (516) sont réalisés sous la forme d'épaulements en L, au moins un des épaulements (516) présentant une hauteur d'épaulement irrégulière en direction périphérique.

3. Corps d'articulation (510) selon la revendication 2,
**caractérisé en ce que** l'épaulement (516) s'étend au moins par portions suivant un angle différent de 90° par rapport à l'axe médian (M).

4. Corps d'articulation (410) selon l'une des revendications 1 à 3,
**caractérisé en ce que** les éléments de collet extérieurs axialement (428) sont réalisés en forme de disque et relié par rivetage à au moins une des douilles (414).

5. Corps d'articulation (610) selon l'une des revendications précédentes,
**caractérisé en ce qu'**un corps de butée (640) est disposé entre deux douilles (614) voisines, à distance de celles-ci.

6. Corps d'articulation (610) selon une la revendication 5,
**caractérisé en ce qu'**une pluralité de corps de butée (640) est disposée à intervalles angulaires réguliers.

7. Corps d'articulation (610) selon la revendication 5 ou 6,
**caractérisé en ce que** la pluralité de corps de butée (640) traverse au moins partiellement l'enveloppe élastique (612) en direction axiale du corps d'articulation (610).

8. Corps d'articulation (610) selon l'une des revendications 5 à 7,
**caractérisé en ce que** les corps de butée (640) sont incorporés par vulcanisation dans l'enveloppe élastique (612) ou pressés dans des évidements (640) prévus dans celle-ci après la vulcanisation.

9. Corps d'articulation (610) selon l'une des revendications 5 à 8,
**caractérisé en ce que** les corps de butée (640) présentent une section sensiblement constante en direction axiale.

10. Corps d'articulation (610) selon l'une des revendications 5 à 9,
**caractérisé en ce que** les corps de butée (640) présentent une section qui diminue en direction de leur centre.

11. Corps d'articulation (610) selon l'une des revendications 5 à 10,
**caractérisé en ce que** les corps de butée (640) présentent une courbure concave en direction des douilles (614).

12. Corps d'articulation (610) selon l'une des revendications 5 à 11,
**caractérisé en ce que** les corps de butée (640) sont fabriqués en métal, en matière plastique ou dans un matériau déformable élastiquement.

13. Corps d'articulation (610) selon les revendications 8 et 12,
**caractérisé en ce que** les corps de butée (640) sont étirables élastiquement avant la mise en place dans l'évidement (642) respectif, de sorte que leur section peut être réduite en direction axiale, qu'ils peuvent être mis en place dans l'évidement (642) respectif à l'état étiré et libérés de leur état étiré après la mise en place dans l'évidement (642).

14. Corps d'articulation (10 ; 110 ; 210 ; 310 ; 410 ; 510 ; 610) selon l'une des revendications précédentes,
**caractérisé en ce que** les éléments de collet (16, 28 ; 116, 128 ; 216, 228 ; 316, 328 ; 416, 428 ; 516, 528 ; 616) sont réalisés en métal ou en matière plastique.
